# EUROPÄISCHE PATENTSCHRIFT

(11) **EP 2 330 718 B1**
(45) Veröffentlichungstag und Bekanntmachung des Hinweises auf die Patenterteilung: **27.04.2022**
(21) Anmeldenummer: 11001709.2
(22) Anmeldetag: 12.05.2009
(51) Int. Cl.: H02K 7/06, B23Q 5/40, B23Q 11/12, F16H 25/20, H02K 5/20, F16H 57/04, H02K 7/08, H02K 9/19

(54) **Spindelmotor**
Spindle motor
Moteur à broche

(30) Priorität: 26.05.2008 DE 102008025072
(43) Veröffentlichungstag der Anmeldung: 08.06.2011
(62) Teilanmeldung aus: 09765479.2
(73) Patentinhaber: SEW-EURODRIVE GmbH & Co. KG, 76646 Bruchsal (DE)
(72) Erfinder: Dittes, Gerhard, 75053 Gondelsheim (DE); Becker, Jürgen, 68789 St. Leon-Rot (DE); Gabriel, Markus, 76694 Forst (DE)
(74) Vertreter: Tüngler, Eberhard

(56) Entgegenhaltungen:
- DE-A1-102004 039 412
- DE-A1-102007 014 714
- JP-A- 2000 158 288

## Beschreibung

Die Erfindung betrifft einen Spindelmotor.

Aus der DE 102 35 078 A1 ist ein Spindelmotor bekannt, der nur ein begrenztes Fettvolumen aufweist und somit eine geringe Standzeit.

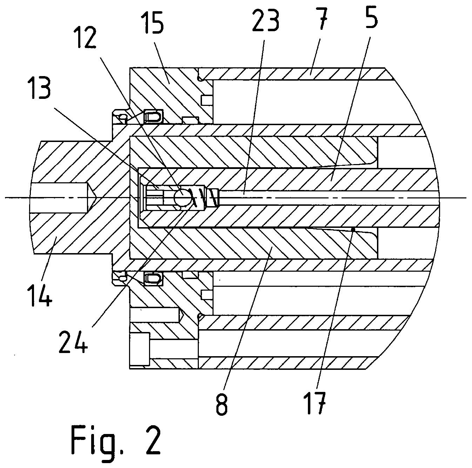

Aus der DE 10 2007 014 714 ist ein Spindelmotor bekannt, der eine Schmierstoffzuführung 21 in der dortigen Figur 2 aufweist. Er muss zeitweise nachgeschmiert werden.

Aus dem Katalog der Firma Dichtomatik sind Hochdruckdichtungen aus dem Fachgebiet der Hydraulik bekannt, wie beispielsweise eine PTFE-Nutringdichtung mit einer V-Feder aus Stahl, dort mit MA47 bezeichnet. Außerdem ist eine weitere Hochdruckdichtung bekannt, wie das Produkt WCP21, welche eine Radial-Wellendichtung mit einer PTFE-Dichtlippe und einer Elastomervorspannscheibe darstellt, die zwischen zwei Metallkäfigen geklemmt sind.

Aus der DE 10 2007 014 714 A1 ist als nächstliegender Stand der Technik ein Spindelmotor bekannt.

Aus der DE 10 2004 039 412 A1 ist eine Spindelvorrichtung und ein Verfahren zu deren Kühlung bekannt.

Der Erfindung liegt die Aufgabe zugrunde, bei einem Spindelmotor die Standzeit zu verlängern.

Erfindungsgemäß wird die Aufgabe bei dem Spindelmotor nach den in Anspruch 1 angegebenen Merkmalen gelöst.

Von Vorteil ist dabei, dass die Entwärmung zwischen den beiden wärmeerzeugenden Teilen angeordnet ist, also zwischen dem Elektromotor und dem Spindeltrieb. Somit ist nur ein Mittel zur Entwärmung notwendig und es werden Aufwand und Teile eingespart. Außerdem ist ein Baukasten von Spindelantrieben herstellbar, wobei an den gleichen Elektromotor verschiedene Spindeltriebe, insbesondere verschieden lange Spindeltriebe, verbindbar sind. Umgekehrt sind auch verschiedene Elektromotoren mit einem gleichartigen Spindeltrieb verbindbar. Auch hierbei ist also dieselbe Entwärmung anbringbar und somit eine große Variantenvielfalt erzeugbar unter Verwendung nur weniger Teile. Durch die Integration des Kühlkanals ist die Entwärmung ohne weitere zusätzliche Teile vorsehbar.

Bei einer vorteilhaften Ausgestaltung ist das Gehäuseteil axial zwischen Elektromotor und dem der Spindelmutter angeordnet. Von Vorteil ist dabei, dass die Entwärmungsmittel beide Raumbereiches des Spindelantriebes entwärmen und somit je nach Betriebsart der Wärmestrom fließt.

Bei einer vorteilhaften Ausgestaltung ist im Gehäuseteil eine Eintritts- und eine Austrittsöffnung zum Kühlkanal vorgesehen. Von Vorteil ist dabei, dass eine integrierte Ausführung ermöglicht ist und somit zusätzliche Teile einsparbar sind. Es genügt also, zwischen Ein- und Austrittsöffnung einen Trennsteg vorzusehen und den Kühlkanal umlaufend, also in Umfangsrichtung auszuführen. Die Ein- und Austrittsöffnungen sind in einfacher Weise als Bohrungen ausführbar.

**Erfindungsgemäß** ist der Kühlkanal zum Elektromotor hin axial begrenzt mittels eines Deckels. Von Vorteil ist dabei, dass der Kühlkanal einfach ausführbar ist, indem eine entsprechende Vertiefung im Gehäuseteil vorgesehen wird und mit dem Deckel abgedeckt wird.

**Erfindungsgemäß** ist zwischen Gehäuseteil und Deckel eine Dichtung vorgesehen. Von Vorteil ist dabei, dass der Austritt eines Kühlmediums in den Spindelantrieb oder die Umgebung verhinderbar ist.

Bei einer vorteilhaften Ausgestaltung ist der Deckel mit dem Gehäuse des Elektromotors wärmeleitend verbunden. Von Vorteil ist dabei, dass trotz der Dichtung, die den Wärmeübergangswiderstand zwischen Deckel und Gehäuseteil vergrößert, eine Entwärmung ermöglicht ist.

**Erfindungsgemäß** ist der Deckel an das Gehäuseteil angeschraubt, wobei die Schrauben auf einem Lochkreis mit einem ersten oder auf einem Lochkreis mit einem zweiten Durchmesser angeordnet sind. Insbesondere umfasst die Dichtung einen inneren und einen äußeren Ring, die über Stege verbunden sind. Von Vorteil ist dabei, dass die Dichtung durch Schrauben auf den ein Zwischenraum ohne Funktion und daher frei haltbar. Der frei gehaltene Raumbereich ist für die Wärmedurchleitung verwendbar. Auf diese Weise ist der Wärmestrom vom Motor zum Kühlkanal nur wenig vermindert und eine effektive Entwärmung erreichbar.

Bei einer vorteilhaften Ausgestaltung verlaufen die Stege radial und sind im Bereich einer Ausnehmung für eine jeweilige Schraube angeordnet. Von Vorteil ist dabei, dass die Stabilität der Dichtung verbessert ist.

Bei einer vorteilhaften Ausgestaltung ist in Umfangsrichtung zwischen den Stegen der Dichtung kein Material der Dichtung vorhanden, wenn der Durchmesserwert in einem Bereich zwischen dem ersten und zweiten Durchmesser liegt. Von Vorteil ist dabei, dass in diesem Zwischenbereich keine Wärmesperre für den vom Motor stammenden Wärmestrom vorhanden ist uns somit ein großer Wärmestrom mittels des Kühlkanals abführbar ist.

Bei einer vorteilhaften Ausgestaltung ist eine Ölbad-Schmierung vorgesehen. Von Vorteil ist dabei, dass ein ständiger Betrieb ohne Unterbrechung für Fettschmierungen und dergleichen ermöglicht ist. Außerdem ist eine besonders kompakte Bauart ermöglicht und geringe Reibungsverluste sind vorsehbar. Insbesondere ist eine Lebensdauerschmierung ermöglicht. Auch die Wärmeabfuhr ist verbessert, da die im Innern erzeugte Wärme besser aufgespreizt ist und somit die gesamte Oberfläche zur Wärmeabfuhr lokalbegrenzter Reibungsquellen und somit Wärmequellen nutzbar ist.

Bei einer vorteilhaften Ausgestaltung ist im Inneren des Spindelmotors, insbesondere im Spindelbereich abtriebsseitig vom Elektromotor, das Ölbad vorgesehen. **Erfindungsgemäß** ist eine Dichtung zwischen dem Raumbereich des Elektromotors und dem Raumbereich, in welchem die Spindelmutter angeordnet ist, vorgesehen. Insbesondere ist zumindest eine Hochdruckdichtung zum Abdichten verwendet, insbesondere zwischen Spindelbereich und Elektromotor und/oder zwischen Spindelbereich und Umgebung. Von Vorteil ist dabei, dass im Elektromotor keine Ölbenetzung auftritt und seine Funktionsweise ungestört bleibt.

Bei einer vorteilhaften Ausgestaltung ist die Dichtung axial zwischen einem Lager der Gewindespindel und einer die Rotorwelle und die Gewindespindel verbindenden Kupplung angeordnet. Von Vorteil ist dabei, dass das Lager und die Dichtung vom Öl schmierbar sind.

Bei einer vorteilhaften Ausgestaltung ist die Kupplung eine axial steckbare Kupplung. Von Vorteil ist dabei, dass das Lösen und Wiederverbinden des Motors einfach und ohne Aufwand ermöglicht ist. Außerdem treten beim Wechseln des Elektromotors keine Ölverluste und Ölverschmutzungen auf.

**Erfindungsgemäß** ist die Dichtung als Wellendichtring ausgeführt, der **im Deckel** seinen Sitz hat, **wobei das Gehäuseteil** einen Sitz zur Aufnahme des Lagers der Gewindespindel aufweist,
wobei die Lauffläche des Wellendichtrings an der Gewindespindel vorgesehen ist. Von Vorteil ist dabei, dass eine kompakte Bauart erreichbar ist und das Gehäuseteil nur mit den zwei Sitzen zu bearbeiten ist. Außerdem gelangt Öl, das in den Bereich des Wellendichtrings gefördert wird einfach und leicht zum Lager.

Bei einer vorteilhaften Ausgestaltung weist die Gewindespindel eine Schulter zur Aufnahme von Axialkräften auf. Von Vorteil ist dabei, dass der Elektromotor vor Axialkräften geschützt bleibt. Außerdem ist somit die axial steckbare Kupplung zum Verbinden verwendbar, da bei Normalbetrieb die Kupplung geschützt ist vor Axialkräften. Wenn nun Motor und Spindel getrennt werden sollen, wird Axialkraft beim Abheben des Motors aufgebracht und somit die Kupplung getrennt.

Insbesondere ist die Schulter am Innenring des für die Gewindespindel vorgesehenen Lagers abgestützt. Von Vorteil ist dabei, dass die Trennung des Motors über die steckbare Kupplung ermöglicht ist.

Bei einer vorteilhaften Ausgestaltung ist die Kolbenstange abtriebsseitig von einer schmierstoffbetriebenen Dichtungsanordnung abgedichtet zum abtriebsseitigen Gehäuseteil hin. Von Vorteil ist dabei, dass einfache und kostengünstige Dichtungen im Gegensatz zu trockenbetriebenen Dichtungen verwendbar sind.

Bei einer vorteilhaften Ausgestaltung umfasst die Dichtungsanordnung zumindest einen Abstreifer, einen O-Ring und/oder eine Nutdichtung. Von Vorteil ist dabei, dass schmierstoffbetriebene, insbesondere ölbetriebene Dichtelemente einsetzbar sind, die auch bei einem Überdruck von 2 bar oder mehr Dichtheit gewährleisten.

Bei einer vorteilhaften Ausgestaltung ist in der Kolbenstange eine Abstützung verbunden, insbesondere eingepresst. Von Vorteil ist dabei, dass die Gewindespindel abstützbar ist und somit mit sehr großer axialer Länge ausführbar ist.

Bei einer vorteilhaften Ausgestaltung ist die Abstützung als im Wesentlichen zylindrische Ausnehmung ausgeführt, wobei an ihrem offenen Endbereich eine Einführschräge für die Einfädelung der Gewindespindel vorgesehen ist. Von Vorteil ist dabei, dass geringe Reibung auftritt, insbesondere bei Verwendung von PTFE-Material, insbesondere also Teflon, für die Abstützung. Dabei ist die Gewindespindel aus Metall, insbesondere Stahl.

Bei einer vorteilhaften Ausgestaltung umfasst die Gewindespindel zumindest einen Schmierstoffkanal, insbesondere einen aus mindestens einer Schmierstoffbohrung zusammengesetzten. Von Vorteil ist dabei, dass Öl durchleitbar ist durch die Gewindespindel hindurch und an einem Ort ausleitbar ist, an welchem zu schmierende Elemente angeordnet sind.

Bei einer vorteilhaften Ausgestaltung umfasst die Gewindespindel an ihrem vom Motor abgewandten Ende ein Ventil, das mit dem Schmierstoffkanal verbunden ist. Von Vorteil ist dabei, dass mittels des Ventils schwankende Drucke ausnutzbar sind und in eine Pumpwirkung verwandelbar ist. Denn bei Überdruck über einem kritischen Wert an Druck öffnet das Ventil, bei unteren Druckwerten bleibt es geschlossen.

Bei einer vorteilhaften Ausgestaltung ist das Ventil zwischen einer Einlassöffnung und dem Schmierstoffkanal ist, insbesondere innerhalb der Gewindespindel. Von Vorteil ist dabei, dass mittels der erwähnten Pumpwirkung Öl durch den Schmierstoffkanal beförderbar ist und somit eine Schmierung von zu schmierenden Elementen ausführbar ist.

Bei einer vorteilhaften Ausgestaltung umfasst das Ventil zumindest eine von einer Feder gegen eine Öffnung gedrückte Kugel. Von Vorteil ist dabei, dass das Ventil mit einfachen und kostengünstigen Mitteln herstellbar ist.

Bei einer vorteilhaften Ausgestaltung mündet der Schmierstoffkanal zumindest mit seinem zweiten Ende derart im Bereich der Dichtung, dass Schmierstoff der Dichtung zugeführt wird. Von Vorteil ist dabei, dass die Dichtung als Wellendichtring ausführbar ist und der mittels des Schmierstoffkanals herangeführte Schmierstoff die Dichtheit gewährleistet.

Bei einer vorteilhaften Ausgestaltung mündet der Schmierstoffkanal zumindest mit seinem zweiten Ende zwischen der Dichtung und dem Lager. Von Vorteil ist dabei, dass Schmierstoff der Dichtung und dem Lager zugeführt wird.

Bei einer vorteilhaften Ausgestaltung ist die Gewindespindel mit dem Rotor gelagert in einem Gehäuseteil des Elektromotors. Von Vorteil ist dabei, dass Lager einsparbar sind.

Bei einer vorteilhaften Ausgestaltung ist zur axialen Führung ein Führungsteil mit der Spindelmutter und der Kolbenstange verbunden. Von Vorteil ist dabei, dass das Führungsteil die Funktion der Verbindung von Spindelmutter und Kolbenstange übernimmt sowie die Funktion der Führung in axialer Richtung.

Bei einer vorteilhaften Ausgestaltung ist das Führungsteil im Gehäuseteil axial geführt über Nutensteine, insbesondere Nutensteine, welche in einer Nut des Gehäuseteils axial bewegbar angeordnet sind. Von Vorteil ist dabei, dass kostengünstige einfache Elemente verwendbar sind.

Bei einer vorteilhaften Ausgestaltung ist der Rotor mit der Gewindespindel spielfrei verbunden, insbesondere mittels einer Schraubverbindung zusammen mit einer Klemmverbindung. Von Vorteil ist dabei, dass die axialen Positionen mit hoher Genauigkeit anfahrbar sind und dabei eine hohe Wiederholgenauigkeit erreichbar ist.

Bei einer vorteilhaften Ausgestaltung ist die Kolbenstange mittels einer Dichtung, insbesondere Stangendichtung, insbesondere Abstreifer, gegen ein Gehäuseteil abgedichtet ist. Von Vorteil ist dabei, dass das Innere des Spindelmotors schützbar ist, insbesondere also auch die Gewindebereiche der Gewindespindel und der Spindelmutter.

Bei einer vorteilhaften Ausgestaltung ist im Bereich der axialen Endpositionen, also Anschläge, des Führungsteils jeweils ein elastisches Element, insbesondere O-Ring, angeordnet zur Aufnahme kinetischer Energie beim Auftreffen auf die Endposition. Von Vorteil ist dabei, dass auch im Sicherheitsfall Zerstörungen vermieden werden.

Bei einer vorteilhaften Ausgestaltung ist das Führungsteil mit der Kolbenstange mittels Klemmverbindung verbunden. Von Vorteil ist dabei, dass eine spielfreie Verbindung ausgeführt ist.

Bei einer vorteilhaften Ausgestaltung umfasst die Klemmverbindung Spannmittel, mit welchen das Führungsteil derart verformbar ist, dass die Kolbenstange einklemmbar ist. Insbesondere sind die Spannmittel tangential ausgerichtet vorgesehen, insbesondere zum Verdrehsichern der Kolbenstange gegen das Führungsteil. Von Vorteil ist dabei, dass einfache und kostengünstige Elemente verwendbar sind.

Bei einer vorteilhaften Ausgestaltung sind drei Nutensteine am Umfang angeordnet. Von Vorteil ist dabei, dass nur eine geringe Anzahl von Nutensteinen notwendig ist.

Bei einer vorteilhaften Ausgestaltung ist ein Stellring vorgesehen, wobei mittels Schraubelementen ein Verspannen des Innenrings eines Lagers des Motors ausführbar ist. Darüber hinaus ist mittels weiterer Schraubelemente ein Erzeugen von Andruckkraft für die Klemmverbindung zwischen Gewindespindel und Rotor ausführbar. Von Vorteil ist dabei, dass in einfacher Weise eine spielfreie Verbindung erzeugbar ist.

Bei einer vorteilhaften Ausgestaltung weist der Rotor in einem axialen Endbereich einen oder mehrere Axialschlitze auf. Von Vorteil ist dabei, dass nur geringe Andruckkräfte zum Verspannen notwendig sind.

Bei einer vorteilhaften Ausgestaltung wird eine formschlüssige Verbindung zwischen Führungsteil und Kolbenstange mittels Spannmitteln vorgesehen. Als Spannmittel sind Spannstifte, also Spannhülsen, verwendbar, die in zylindrische Bohrungen eingesteckt sind. Für diese formschlüssige Verbindung ist an der Kolbenstange eine derartige Abflachung vorgesehen, dass die Spannstifte berührend umgeben sind und sich an diese Abflachungsoberfläche anschmiegen infolge ihrer durch elastische Verformung bedingten Anpresskraft. Dazu ist die Abflachung als Teil einer Oberfläche eines gedachten Zylinders ausgeführt. Von Vorteil ist dabei, dass nur geringe Andruckkräfte zum Verspannen notwendig sind.

Bei einer vorteilhaften Ausgestaltung weist die Gewindespindel an ihrem einen Endbereich einen Zapfen zum Zentrieren auf. Von Vorteil ist dabei, dass einfache und kostengünstige Zentriermittel vorgesehen sind und kein zusätzlicher Bauraum hierfür notwendig ist.

Bei einer vorteilhaften Ausgestaltung ist das Zentrierteil zum Zentrieren des Gehäuseteils am Motorflansch vorgesehen. Insbesondere ist das Zentrierteil zur Aufnahme eines elastischen Elements vorgesehen. Von Vorteil ist dabei, dass ein elastischer Anschlag für das Führungselement vorsehbar ist.

Bei einer vorteilhaften Ausgestaltung ist die Kolbenstange an ihrer zur Umgebung hin vorgesehenen Oberfläche glatt ausgeführt. Von Vorteil ist dabei, dass keine Verschmutzungen ins Innere des Spindelmotors vordringen können, weil eine Abdichtung zum Gehäuseteil in einfacher und wirkungsvoller Weise ausführbar ist.

Bei einer vorteilhaften Ausgestaltung umfasst der Rotor Permanentmagnete, insbesondere der Spindelmotor nach dem Synchronmotor-Prinzip angetrieben ist. Von Vorteil ist dabei, dass hohe Kräfte erzeugbar sind. Weitere Vorteile ergeben sich aus den Unteransprüchen.

Die Erfindung wird nun anhand von Abbildungen näher erläutert:

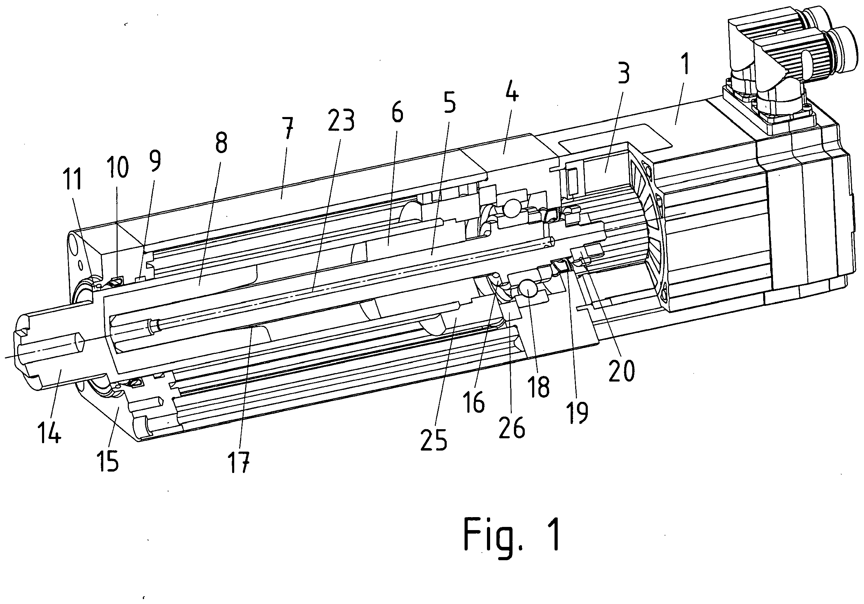

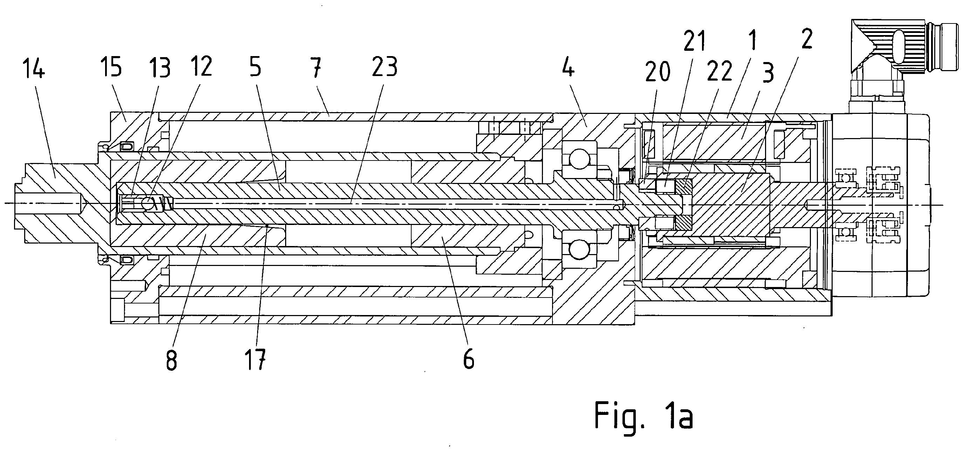

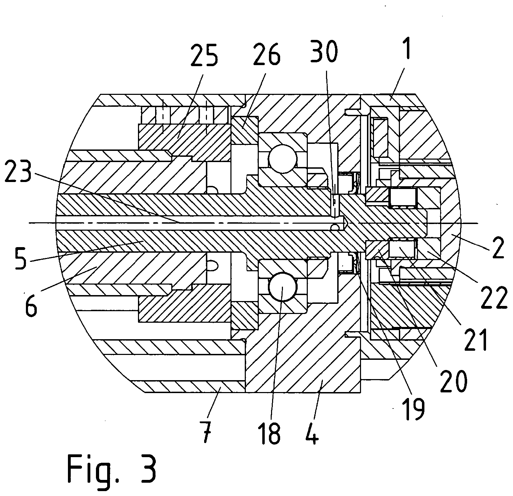

In der Figur 1 ist ein erfindungsgemäßer Spindelmotor in angeschnittener Schrägansicht und in Figur 1a in Schnittansicht gezeichnet. In Figur 2 und 3 sind jeweilige Ausschnitte hiervon vergrößert dargestellt.

Das Motorgehäuse 1 des Elektromotors, umfassend Rotorwelle 2 und Stator 3, ist mit den Gehäuseteilen 4, 7 und 15 des Spindelmotors dicht verbunden. Vorzugsweise ist an jeder Verbindungsschnittstelle der Gehäuseteile ein O-Ring miteingebracht, um Dichtheit auch gegen Überdruck, von mehr als beispielsweise 2 bar zu gewährleisten.

Das Gehäuseteil 4 nimmt das Lager 18 auf, über welches die Gewindespindel 5 gelagert ist. Diese ist über eine axial steckbare Kupplung mit der Rotorwelle 2 verbunden. Die Kupplung weist ein Klauenteil 20 und ein Klauenteil 22 auf, zwischen denen ein Kunststoffstern 21 angeordnet ist. Vorzugsweise ist diese Wellenkupplung spielfrei.

Eine im Gehäuseteil 4 angeordnete Dichtung 19 dichtet den Spindelinnenraum gegen den Motor hin ab.

Somit ist der Innenraum mit Öl befüllbar. Abtriebsseitig ist die Kolbenstange 14 mittels Führungsring 9, Dichtring 10 und Abstreifer 11 abgedichtet gegen die Umgebung.

Die Dichtungen sind dabei derart gewählt, dass sie gegen Überdrucke von mehr als 2 bar Dichtheit gewährleisten.

Die Gewindespindel weist eine Schulter 16 auf, die Axialkräfte ableitet an das Lager 18.

Bei Drehen der Gewindespindel 5 wird die Spindelmutter 6 axial bewegt, weil sie über Führungsteile (25, 26), die mit Linearführvorrichtungen verbunden sind, linear geführt ist.

Zur Abstützung bei besonders langer Ausführung der Gewindespindel 5 ist eine Abstützung 8 aus Teflon vorgesehen, die eine zylindrische Bohrung aufweist zur Aufnahme der Gewindespindel 5 und an ihrem offenen Ende eine Aufweitung aufweist, die in den Figuren 1 und 2 als Einführschräge 17 erkennbar ist.

Die Abstützung 8 ist pressverbunden in der Kolbenstange 14 und verliert den Kontakt zur Gewindespindel 5, wenn die Kolbenstange weit heraus gefahren wird. In diesem Fall ist jedoch auch die Spindelmutter weit verfahren und übernimmt die abstützende Funktion.

Beim Zurückfahren wird dann die Gewindespindel in die Einführschräge sozusagen eingefädelt.

Um die Gewindespindel 5 herum ist Schmierstoff vorgesehen, insbesondere Öl.

Dieses fließt insbesondere bei einer Einbaulage, in welcher die Kolbenstange 14 nach unten zeigt, zum entsprechenden axialen Endbereich. Wird nun der Spindelmotor hin und her gefahren, wird ein Ventil durch auftretenden lokalen Überdruck aktiviert. Hierzu wird die Kugel 12 von der Hülse 13 abgehoben und das Öl fließt durch die Hülse 13 an der Kugel 12 vorbei in die Schmierstoffbohrung 23 und wird bis zur Radialbohrung 30 befördert, wo es dann austritt im Bereich des Lagers 18 und der Dichtung 19.

Somit ist eine Schmierung in jeder Einbaulage gewährleistet.

Die geschilderte Ölpumpe ist wirksam, wenn die Kolbenstange nach unten also in Gravitationsrichtung weist. Wenn sie jedoch nach oben weist, fließt das Öl selbsttätig zum Lager 18 und der Dichtung 19.

Die Kugel 12 wird bei Abbau des lokalen Überdrucks durch ein Federelement 24 in ihre Ausgangslage versetzt.

Das Ölbad verbessert die Wärmeabfuhr, da die Wärme besser aufgespreizt wird und somit die Gehäuseteile gleichmäßiger erwärmt sind vom Inneren her des Spindelmotorbereichs.

Als Dichtung ist vorzugsweise eine Hochdruckdichtung verwendet, wie beispielsweise eine WCP21 oder MA47.

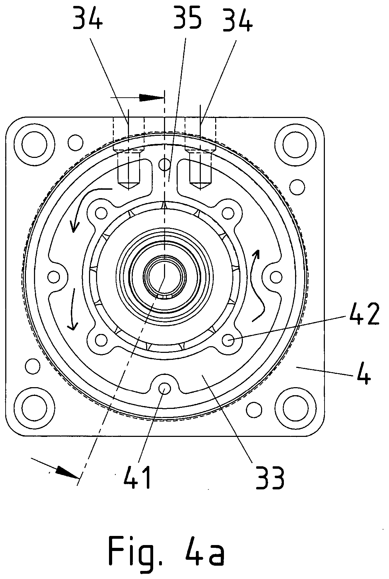

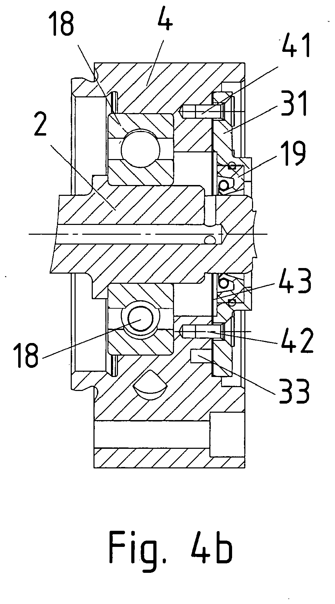

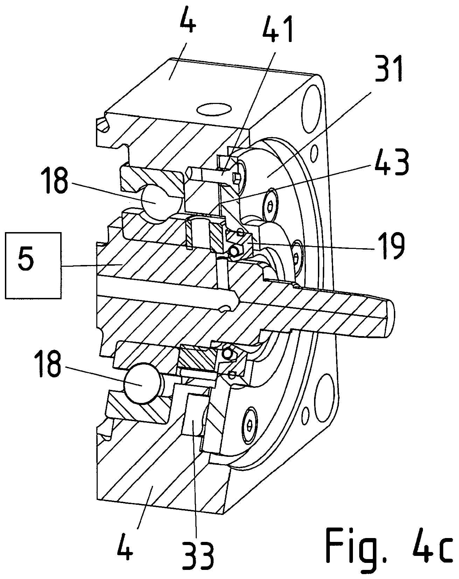

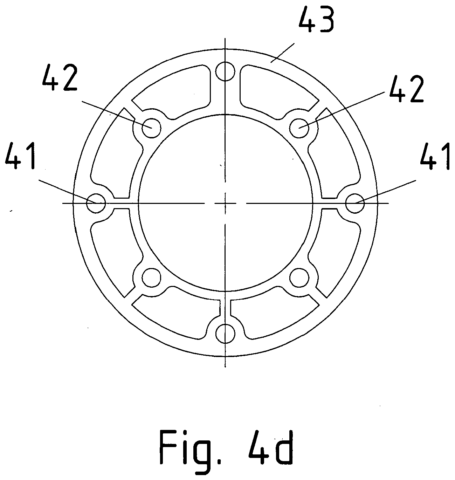

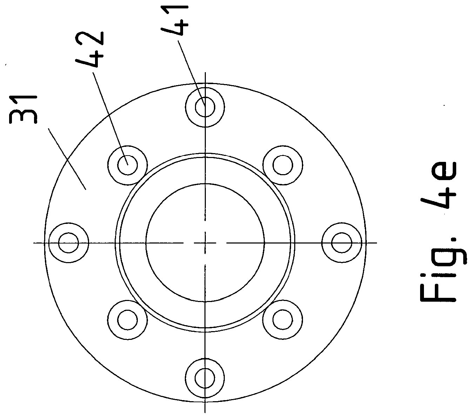

In den Figuren 4a bis 4c wird das Gehäuseteil 4 genauer gezeigt. In der Figur 4d wird die Ausführung der Dichtung 43 und in der Figur 4e die Ausführung des Deckels 31 näher gezeigt.

Der Deckel 31 weist Bohrlöcher auf einem Lochkreis 41 mit erstem Durchmesser und auf einem Lochkreis 42 mit zweitem Durchmesser **auf,** der **kleiner** ist als der erste Durchmesser.

Im Gehäuseteil 4 ist an dessen dem Deckel zugewandten axialen Endbereich ein Kühlkanal 33 vorgesehen, der in Umfangsrichtung verläuft, wobei am Anfang des Kühlkanals eine Eintrittsöffnung 34 und am Ende des Kühlkanals eine Austrittsöffnung 34 für ein Kühlmedium vorgesehen ist. Anfang und Ende sind durch einen Trennsteg 35 voneinander getrennt.

Das Gehäuseteil 4 weist ebenfalls Bohrlöcher auf einem Lochkreis 41 mit dem ersten Durchmesser und auf dem Lochkreis 42 mit dem zweiten Durchmesser auf.

Die radial außen liegende Oberfläche des Kühlkanals 33 weist einen in Umfangsrichtung schwankenden Radiusverlauf auf, da Verdickungen im Bereich der Bohrlöcher des Lochkreises 41 vorgesehen sind. Ebenso weist die radial innen liegende Oberfläche des Kühlkanals 33 einen in Umfangsrichtung schwankenden Radiusverlauf auf, da Verdickungen im Bereich der Bohrlöcher des Lochkreises 42 vorgesehen sind. Dabei sind die beiden schwankenden Verläufe mit Winkelversatz ausgeführt, also die Bohrlöcher des ersten und zweiten Lochkreises (41, 42) in Umfangsrichtung jeweils voneinander beabstandet.

Auf diese Weise ist der Kühlkanal in Umfangsrichtung mäanderförmig ausgeführt.

Zwischen Gehäuseteil 4 und Deckel 31 ist eine vorzugsweise elastische Dichtung 43 eingelegt. Diese ist aus einem äußeren und einem inneren Ring zusammengesetzt, die über jeweils im Bereich der Bohrlöcher liegende, im Wesentlichen radial verlaufende Stege verbunden sind. Die Dichtung ist vorzugsweise einstückig aus einem gummiartigen Stoff oder aus Kunststoff ausgeführt.

Der innere Ring und der äußere Ring der Dichtung 43 ist im Bereich des ersten und zweiten Lochkreises (41,42) mittels des flach ausgeführten Deckels 31 auf entsprechende ringförmige, axial zur Dichtung 43 herausstehenden Wulste gedrückt, in welche die Bohrlöcher eingebracht sind zur Befestigung des Deckels 31 am Gehäuseteil 4.

Vorteiligerweise wird durch **den Deckel** 31 keine totale axiale Wärmesperre realisiert sondern die Wärme des Elektromotors dringt im Wesentlichen ungehindert über den Deckel 31 ins Kühlmedium. Außerdem wird die Wärme des Spindeltriebes über das Gehäuseteil 4 ins Kühlmedium geführt. Trotzdem ist mittels **des Deckels** 31 der Austritt von Kühlmedium in den Elektromotor oder in die Umgebung verhindert.

Weiter vorteilig ist auch die mittige Anordnung der Kühlvorrichtung zwischen die beiden wärmeerzeugenden Komponenten des Antriebs, also des Elektromotors und des Spindeltriebs.

Die Eintritts- und Austrittsöffnung 34 für das Kühlmedium führen aus ungefähr radialer Richtung in den Kühlkanal. Die Fließrichtung des Kühlmediums ist in der Figur mit Pfeilen angedeutet.

Mittels des mäanderförmigen Verlaufs in Umfangrichtung des Kühlkanals wird der Wärmeübergangswiderstand in das Kühlmedium weiter verringert und somit die Entwärmung verbessert.

Deckel 31 und Gehäuseteil 4 weisen eine nitrierte Stahloberfläche auf, wodurch die Korrosionsbeständigkeit verbessert ist. Auch ionisiertes Wasser, Säuren oder Alkalische Lösungen sind somit als Kühlmedium verwendbar.

### Bezugszeichenliste

- 1: Motorgehäuse
- 2: Rotorwelle
- 3: Stator
- 4: Gehäuseteil
- 5: Gewindespindel
- 6: Spindelmutter
- 7: Gehäuseteil
- 8: Abstützung
- 9: Führungsring
- 10: Dichtring
- 11: Abstreifer
- 12: Kugel
- 13: Hülse
- 14: Kolbenstange
- 15: Gehäuseteil
- 16: Schulter zur Axialkraftaufnahme
- 17: Einführschräge
- 18: Lager
- 19: Dichtung, Wellendichtring
- 20: Klauenteil
- 21: Kunststoffstern
- 22: Klauenteil
- 23: Schmierstoffbohrung
- 24: Federelement
- 25: Spindelmutter
- 26: Führungsteil
- 30: Radialbohrung
- 31: Deckel
- 33: Kühlkanal
- 34: Eintritts- und Austrittsöffnung für Kühlmedium
- 35: Trennsteg
- 41: Lochkreis **mit** erstem Durchmesser
- 42: Lochkreis mit zweitem Durchmesser
- 43: Dichtung

## Patentansprüche

1. Spindelmotor,
umfassend einen Elektromotor mit einem Rotor, der mit einer Gewindespindel (5) verbunden ist, deren Gewinde mit einem Gewinde einer mit einer Kolbenstange (14) verbundenen Spindelmutter (6) im Eingriff steht,
wobei die Spindelmutter (6) mit Kolbenstange (14) axial geführt ist in einem **ersten** Gehäuseteil (7),
wobei zur axialen Führung ein Führungsteil (25) mit der Spindelmutter (6) und der Kolbenstange (14)
verbunden ist,
wobei die Gewindespindel (5) in einem zweiten, mit dem ersten Gehäuseteil (7) verbundenen Gehäuseteil (4) über ein Lager (18) gelagert ist,
**dadurch gekennzeichnet, dass**
**im zweiten Gehäuseteil (4) ein in Umfangsrichtung verlaufender Kühlkanal (33) ausgebildet ist,**
**wobei der Kühlkanal (33) zum Elektromotor hin axial begrenzt ist mittels eines Deckels (31),**
**wobei eine erste Dichtung (19) zwischen dem Raumbereich des Elektromotors und dem Raumbereich, in welchem die Spindelmutter (6) angeordnet ist, vorgesehen ist,**
**wobei die erste Dichtung (19) als Wellendichtring ausgeführt ist, der im Deckel (31) seinen Sitz hat,**
**wobei das Gehäuseteil (4) einen Sitz zur Aufnahme des Lagers (18) der Gewindespindel (5) aufweist,**
wobei die Lauffläche des Wellendichtrings (19) an der Gewindespindel (5) vorgesehen ist,
wobei der Deckel (31) an das Gehäuseteil (4) angeschraubt ist,
wobei die Schrauben auf einem Lochkreis mit einem ersten oder auf einem Lochkreis mit einem zweiten Durchmesser angeordnet sind,
wobei eine weitere Dichtung (43) zwischen dem zweiten Gehäuseteil (4) und dem Deckel (31) angeordnet ist.

2. Spindelmotor nach Anspruch 1,
**dadurch gekennzeichnet, dass**
im Gehäuseteil (4) eine Eintritts- und eine Austrittsöffnung (34) zum Kühlkanal (33) vorgesehen ist.

3. Spindelmotor nach mindestens einem der vorangegangenen Ansprüche,
**dadurch gekennzeichnet, dass**
der Deckel (31) mit dem Gehäuse des Elektromotors wärmeleitend verbunden ist.

4. Spindelmotor nach mindestens einem der vorangegangenen Ansprüche,
**dadurch gekennzeichnet, dass**
die **weitere** Dichtung (43) einen inneren und einen äußeren Ring umfasst, die über Stege verbunden sind.

5. Spindelmotor nach Anspruch 4,
**dadurch gekennzeichnet, dass**
die Stege radial verlaufen und im Bereich einer Ausnehmung für eine jeweilige Schraube angeordnet sind.

6. Spindelmotor nach Anspruch 1 oder 4,
**dadurch gekennzeichnet, dass**
**in Umfangsrichtung zwischen den Stegen der Dichtung kein Material der Dichtung vorhanden ist, wenn der Durchmesserwert in einem Bereich zwischen dem ersten und zweiten Durchmesser liegt.**

7. Spindelmotor nach mindestens einem der vorangegangenen Ansprüche,
**dadurch gekennzeichnet, dass**
das **zweite** Gehäuseteil **(4)** axial zwischen Elektromotor und dem **Gehäuseteil** (7) der Spindelmutter (6) angeordnet ist.

8. Spindelmotor nach mindestens einem der vorangegangenen Ansprüche,
**dadurch gekennzeichnet, dass**
**die erste Dichtung (19), also der Wellendichtring, axial zwischen einem Lager der Gewindespindel (5) und einer die Rotorwelle (2) und die Gewindespindel (5) verbindenden Kupplung angeordnet ist,**
**wobei die Kupplung eine axial steckbare Kupplung ist,**
**wobei der Wellendichtring** in einem Gehäuseteil (4) seinen Sitz hat, welches auch einen Sitz zur Aufnahme des Lagers der Gewindespindel (5) aufweist,
wobei die Lauffläche des Wellendichtrings an der Gewindespindel (5) vorgesehen ist.

9. Spindelmotor nach mindestens einem der vorangegangenen Ansprüche,
**dadurch gekennzeichnet, dass**
eine Ölbad-Schmierung vorgesehen ist,
wobei im Inneren des Spindelmotors, insbesondere im Spindelbereich abtriebsseitig vom Elektromotor das Ölbad vorgesehen ist,

10. Spindelmotor nach mindestens einem der vorangegangenen Ansprüche,
**dadurch gekennzeichnet, dass**
die Gewindespindel (5) zumindest einen Schmierstoffkanal umfasst, insbesondere einen aus mindestens einer Schmierstoffbohrung zusammengesetzten.

11. Spindelmotor nach Anspruch 10,
**dadurch gekennzeichnet, dass**
die Gewindespindel (5) an ihrem vom Motor abgewandten Ende ein Ventil umfasst, das mit dem Schmierstoffkanal verbunden ist.

12. Spindelmotor nach Anspruch 11,
**dadurch gekennzeichnet, dass**
das Ventil zwischen einer Einlassöffnung und dem Schmierstoffkanal vorgesehen ist, insbesondere innerhalb der Gewindespindel (5).

13. Spindelmotor nach mindestens einem der vorangegangenen Ansprüche,
**dadurch gekennzeichnet, dass**
das Ventil zumindest eine von einer Feder gegen eine Öffnung gedrückte Kugel (12) umfasst.

## Claims

1. A spindle motor,
comprising an electric motor with a rotor which is connected to a threaded spindle (5) whose thread engages a thread of a spindle nut (6) connected to a piston rod (14),
wherein the spindle nut (6) with piston rod (14) is axially guided in a first housing part (7),
wherein a guide part (25) is connected to the spindle nut (6) and the piston rod (14) for the purpose of axial guiding,
wherein the threaded spindle (5) is mounted, via a bearing (18), in a second housing part (4) connected to the first housing part (7),
**characterized in that**
a cooling channel (33), running in a circumferential direction, is formed in the second housing part (4),
wherein the cooling channel (33) is axially bounded toward the electric motor by means of a cover (31),
wherein a first seal (19) is provided between the spatial region of the electric motor and the spatial region in which the spindle nut (6) is arranged,
wherein the first seal (19) is in the form of a shaft sealing ring having its seat in the cover (31),
wherein the housing part (4) has a seat for receiving the bearing (18) of the threaded spindle (5),
wherein the running surface of the shaft sealing ring (19) is provided at the threaded spindle (5),
wherein the cover (31) is screwed to the housing part (4),
wherein the screws are arranged on a hole circle with a first diameter or on a hole circle with a second diameter,
wherein a further seal (43) is arranged between the second housing part (4) and the cover (31).

2. A spindle motor according to claim 1,
**characterized in that** an entry and an exit opening (34) to/from the cooling channel (33) is provided in the housing part (4).

3. A spindle motor according to at least one of the preceding claims,
**characterised in that**
the cover (31) is connected to the housing of the electric motor in a heat-conducting manner.

4. A spindle motor according to at least one of the preceding claims,
**characterised in that** the further seal (43) comprises an inner and an outer ring, which are connected via elongated members.

5. A spindle motor according to claim 4,
**characterised in that**
the elongated members run radially and are arranged in the region of an opening for a respective screw.

6. A spindle motor according to claim 1 or 4,
**characterised in that**
no seal material is present in the circumferential direction between the elongated members of the seal when the diameter value lies in a range between the first and second diameter.

7. A spindle motor according to at least one of the preceding claims,
**characterised in that**
the second housing part (4) is arranged axially between electric motor and the housing part (7) of the spindle nut (6).

8. A spindle motor according to at least one of the preceding claims,
**characterised in that**
the first seal (19), therefore the shaft sealing ring, is arranged axially between a bearing of the threaded spindle (5) and a coupling connecting the rotor shaft (2) and the threaded spindle (5), wherein the coupling is an axially pluggable coupling,
wherein the shaft sealing ring has its seat in a housing part (4) which also has a seat for receiving the bearing of the threaded spindle (5),
wherein the running surface of the shaft sealing ring is provided at the threaded spindle (5).

9. A spindle motor according to at least one of the preceding claims,
**characterised in that**
oil bath lubrication is provided,
wherein the oil bath is provided within the spindle motor, in particular in the spindle region at the output side of the electric motor.

10. A spindle motor according to at least one of the preceding claims,
**characterised in that**
the threaded spindle (5) comprises at least one lubricant channel, in particular a lubricant channel composed of at least one lubricant bore.

11. A spindle motor according to claim 10,
**characterised in that** the threaded spindle (5) comprises a valve at its end remote from the motor, which valve is connected to the lubricant channel.

12. A spindle motor according to claim 11,
**characterised in that**
the valve is provided between an inlet opening and the lubricant channel, in particular within the threaded spindle (5).

13. A spindle motor according to at least one of the preceding claims,
**characterised in that**
the valve comprises at least one ball (12) pressed against an opening by a spring.

## Revendications

1. Moteur à broche,
comprenant un moteur électrique comportant un rotor qui est relié à une broche filetée (5) dont le filetage est en prise avec un filetage d'un écrou de broche (6) relié à une tige de piston (14),
l'écrou de broche (6) avec tige de piston (14) étant guidé axialement dans une première partie de boîtier (7),
une partie de guidage (25) étant reliée à l'écrou de broche (6) et à la tige de piston (14) pour le guidage axial,
la broche filetée (5) étant montée dans une deuxième partie de boîtier (4) reliée à la première partie de boîtier (7) par l'intermédiaire d'un palier (18),
**caractérisé en ce**
**qu'**un canal de refroidissement (33) s'étendant dans la direction circonférentielle est formé dans la deuxième partie de boîtier (4),
le canal de refroidissement (33) étant limité axialement vers le moteur électrique au moyen d'un couvercle (31),
un premier joint d'étanchéité (19) étant prévu entre la zone d'espace du moteur électrique et la zone d'espace dans laquelle l'écrou de broche (6) est disposé,
le premier joint (19) étant réalisé sous la forme d'une bague d'étanchéité d'arbre qui a son siège dans le couvercle (31),
la partie de boîtier (4) présentant un siège pour recevoir le palier (18) de la broche filetée (5),
la surface de roulement de la bague d'étanchéité d'arbre (19) étant prévue sur la broche filetée (5),
le couvercle (31) étant vissé sur la partie de boîtier (4),
les vis étant disposées sur un cercle de trous ayant un premier diamètre ou sur un cercle de trous ayant un deuxième diamètre,
un autre joint d'étanchéité (43) étant disposé entre la deuxième partie de boîtier (4) et le couvercle (31).

2. Moteur à broche selon la revendication 1,
**caractérisé en ce**
**qu'**une ouverture d'entrée et de sortie (34) vers le canal de refroidissement (33) est prévue dans la partie de boîtier (4).

3. Moteur à broche selon au moins l'une des revendications précédentes,
**caractérisé en ce**
**que** le couvercle (31) est relié de manière thermoconductrice au boîtier du moteur électrique.

4. Moteur à broche selon au moins l'une des revendications précédentes,
**caractérisé en ce**
**que** l'autre joint (43) comprend une bague intérieure et une bague extérieure reliées par des entretoises.

5. Moteur à broche selon la revendication 4,
**caractérisé en ce**
**que** les entretoises s'étendent radialement et sont disposées dans la zone d'un évidement pour une vis respective.

6. Moteur à broche selon la revendication 1 ou 4,
**caractérisé en ce**
**qu'**aucun matériau du joint n'est présent dans la direction circonférentielle entre les entretoises du joint lorsque la valeur du diamètre se situe dans une plage comprise entre le premier et le deuxième diamètre.

7. Moteur à broche selon au moins l'une des revendications précédentes,
**caractérisé en ce**
**que** la deuxième partie de boîtier (4) est disposée axialement entre le moteur électrique et la partie de boîtier (7) de l'écrou de broche (6).

8. Moteur à broche selon au moins l'une des revendications précédentes, **caractérisé en ce**
**que** le premier joint (19), à savoir la bague d'étanchéité d'arbre, est disposé axialement entre un palier de la broche filetée (5) et un accouplement reliant l'arbre de rotor (2) et la broche filetée (5),
l'accouplement étant un accouplement enfichable axialement,
la bague d'étanchéité d'arbre ayant son siège dans une partie de boîtier (4) qui présente également un siège pour recevoir le palier de la broche filetée (5),
la surface de roulement de la bague d'étanchéité d'arbre étant prévue sur la broche filetée (5).

9. Moteur à broche selon au moins l'une des revendications précédentes,
**caractérisé en ce**
**qu'**il est prévu une lubrification par bain d'huile,
le bain d'huile étant prévu à l'intérieur du moteur à broche, en particulier dans la zone de la broche côté sortie du moteur électrique.

10. Moteur à broche selon au moins l'une des revendications précédentes,
**caractérisé en ce**
**que** la broche filetée (5) comprend au moins un canal de lubrifiant, en particulier un canal composé d'au moins un alésage de lubrifiant.

11. Moteur à broche selon la revendication 10,
**caractérisé en ce**
**que** la broche filetée (5) comprend, à son extrémité opposée au moteur, une soupape reliée au canal de lubrifiant.

12. Moteur à broche selon la revendication 11,
**caractérisé en ce**
**que** la soupape est prévue entre une ouverture d'admission et le canal de lubrifiant, en particulier à l'intérieur de la tige filetée (5).

13. Moteur à broche selon au moins l'une des revendications précédentes,
**caractérisé en ce**
**que** la soupape comprend au moins une bille (12) pressée contre une ouverture par un ressort.
